# EUROPEAN PATENT APPLICATION

(11) **EP 2 813 984 A1**
(43) Date of publication of application: **17.12.2014**
(21) Application number: 13305788.5
(22) Date of filing: 11.06.2013
(51) Int. Cl.: G06Q 10/10, G06Q 50/00, G06F 17/30, G06F 3/0481, G06Q 30/02, G11B 27/11

(54) **Method and System for Summarizing Multimedia Content**

(71) Applicant: ALCATEL LUCENT, 92100 Boulogne-Billancourt (FR)
(72) Inventor: Hebbar, Abdelkrim, 91620 NOZAY (FR); Picault, Jerome, 91620 NOZAY (FR); Ribiere, Myriam, 91620 NOZAY (FR); Gaste, Yann, 91620 NOZAY (FR)
(74) Representative: Novagraaf Technologies

(57) **Abstract**

A method for summarizing a multimedia content, the method comprising the following steps:
- segmenting a multimedia content (**100a**) into temporally ordered multimedia segments;
- extracting topics from social interactions (**100b**) relating to the said multimedia content (**100a**);
- associating each extracted topic to a sequence of multimedia segments.

## Description

### FIELD OF THE INVENTION

The present invention relates to the technical field of multimedia summarization with related social interactions content.

### BACKGROUND OF THE INVENTION

As used herein, the term "multimedia" is meant broadly and not restrictively to include resources or files comprising one or several content such as images, videos, sounds, or music.

The term "summarization" refers here to methods and means to select, extract or retain information judged as the most relevant/important of a certain content.

"Perspective", "point of view" refer here to how an object, a subject or a topic is perceived, described or interpreted.

"Social interactions" refer here to social content such as information, comments or ideas created, shared, and exchanged in a "conversational space" such as microblogging, social networks or any other discussion spaces. In the context of microblogging, "social interactions" may be, for instance, interpreted as microposts.

The proliferation of broadband internet connections and the development of innovative media sharing services over the World Wide Web have contributed to the establishment of digital media as a necessary part of our lives. Social media services such as Facebook®, Youtube® and micro blogging applications such as Twitter®, are changing how many people consume traditional media. As an example, the second television debate between Barack Obama and Mitt Romney during US'12 Elections generated 7.2 million tweets. Letting people broadcast their own thoughts, sentiments, opinions and emotions and following other social interactions related to what they are watching provides a more active and powerful experience from the end-user point of view.

However, the increased significance of digital media as a means of communication combined with the availability of inexpensive hardware for capturing and transmitting digital media have inevitably resulted in a tremendous growth of media material created every day. Video-sharing websites, social networks or microblogging services especially reflects these tendencies. For instance, every minute, on Flickr®, 20 millions of photos are viewed and on YouTube®, 1.3 millions videos are watched and 30 hours of videos are shared.

As a consequence, there is a real problem of navigation in this overabundance of contents. Searching and finding a relevant multimedia content is then a cumbersome and difficult task since it is quite difficult and time consuming for users to read all the pertinent multimedia contents to find a particular one.

While searching engines, offering filtering features could help users to determine their choice, in most cases accuracy of responses is not satisfactory when the users request does not match exactly terms contained in the classification index of these searching engines.

Accordingly one problem to solve is to decrease the time consuming and difficulty to find a relevant multimedia content among the overabundance of contents.

Most common solutions to solve this problem, rely either on indexation or on summarization of contents.

The methods of indexation of contents require descriptive metadata of a multimedia content to index/classify. These metadata are used by a search engine to process and retrieve the searched multimedia content.

Hence, to provide an efficient searching tool, good quality descriptive metadata are required.

Usually, the descriptive metadata set is generated from the multimedia content material: audio transcription, closed captions, subtitles, Electronic Program Guide. More rarely, it could be enriched by added textual elements reflecting a category in a classification system. So in any cases, the classification index source is based on terms provided by the multimedia content producer that do not always fit the users request such as in term of vocabulary specificities or word combination.

Although this technology could be accurate, the classification is done for the whole multimedia content and is not generally enough to solve the problem of finding a relevant part of a multimedia content corresponding to a user interest.

Consequently, additional technologies are considered to go further in the problem resolution of decreasing search consumption time.

One other most common technique to solve the above cited problem is the summarizing of multimedia content.

Several methods for summarizing a multimedia content are described in the prior art. Most of them use descriptive information coming from textual analysis of the closed caption content, Electronic Program Guide (EPG), speech to text analysis/audio transcript, or multimedia analyses of the video content.

Nevertheless, the existing methods are limited by the fact that their data inputs are provided by multimedia content creators.

In a limited number of cases, the descriptive metadata provided with the multimedia content and/or its summary are sufficient to give a coarse grain overview of the whole multimedia content, that rarely fits the user point of views expressed through their request.

In fact, it is not possible to retrieve a short extract of multimedia content, designated below as "segment", matching closely to what has been requested by the user.

Moreover, the results of these methods are generally provided according only to perspectives representative of various aspects of the multimedia content itself, and do not describe various point of views of users.

One object of the present solution is to provide a solution to the aforementioned problems, and offers other advantages over the prior art.

Another object of the present invention is to decrease the consumption time and the difficulty to find a relevant multimedia content.

Another object of the present invention is to target more accurately multimedia segments according to the user requests.

Another object of the present invention is to provide a users oriented solution.

Another object of the present invention is to provide a more accurate data source for summarization methods.

Another object of the present invention is to leverage the social interactions associated to multimedia content, to compute different user perspectives.

### SUMMARY OF THE INVENTION

Various embodiments are directed to addressing the effects of one or more of the problems set forth above. The following presents a simplified summary of embodiments in order to provide a basic understanding of some aspects of the various embodiments. This summary is not an exhaustive overview of these various embodiments. It is not intended to identify key of critical elements or to delineate the scope of these various embodiments. Its sole purpose is to present some concepts in a simplified form as a prelude to the more detailed description that is discussed later.

Various embodiments relate to methods for summarizing a multimedia content, the method comprising the following steps:
- segmenting a multimedia content into temporally ordered multimedia segments;
- extracting topics from social interactions relating to the said multimedia content;
- associating each extracted topic to a sequence of multimedia segments.

In accordance with a broad aspect, the above methods may further comprise a concatenation step of relevant multimedia segments into multimedia summary segments.

Further, various embodiments relate to systems for summarizing a multimedia content, the system comprising the following modules:
- a Multimedia Segmentation module configured to segment a multimedia content into temporally ordered multimedia segments;
- a Topic Generator module comprising a Social Topics Extractor module, configured to extract topics from social interactions relating to the said multimedia content;
- a Multimedia Segments Classifier module configured to associate each extracted topic to a sequence of multimedia segments.

In accordance with a broad aspect, the above system may further comprise a Multi-Layer Summarizer module, configured to concatenate the multimedia segments into multimedia summary segments.

Various embodiments further relate to computer program products for performing the above methods.

While the various embodiments are susceptible to various modification and alternative forms, specific embodiments thereof have been shown by way of example in the drawings. It should be understood, however, that the description herein of specific embodiments is not intended to limit the various embodiments to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

### DESCRIPTION OF THE DRAWING

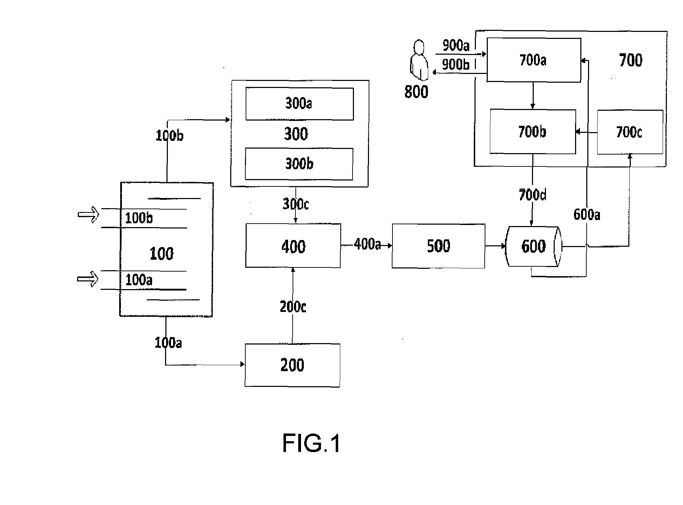

The objects, advantages and other features of various embodiments will become more apparent from the following disclosure and claims. The following non-restrictive description of preferred embodiments is given for the purpose of exemplification only with reference to the accompanying drawing in which FIG. 1 is a schematic diagram illustrating a functional architecture of an embodiment for multi-viewpoint multimedia summarization based on the analysis of social interactions content.

### DETAILED DESCRIPTION OF ILLUSTRATIVE EMBODIMENTS

With reference to figure 1, the presented architecture shows the components of an embodiment permitting to provide multi-viewpoint summaries of a multimedia content, based on the analysis of associated social interactions.

The considered context is a social multimedia content stream **100,** comprising two types of input data: a multimedia content **100a** and its related social interactions **100b.** The multimedia content **100a** may be for instance a video mainly mixing images and sounds, and may be eventually augmented by audio transcript, closed captions or EPG.

The social interactions **100b** may be, for instance, microposts, comments provided by users on microblogging services, media sharing services or social networks, these comments referring to the multimedia content **100a.** The merging step between the multimedia content **100a** and the social interactions **100b** may be performed for instance based on a method such as described in the Alcatel-Lucent® patent application EP-13155839 ("Device For Controlling Synchronization Of A Set Of Data Contents With A Multimedia Content, And Device For Retrieving Said Data Contents For An Equipment", GASTE Yann; VERDOT Vincent). In fact, this document describes means for providing communication equipments with data contents to be stored, transferred and displayed with associated multimedia contents. To do so, data contents associated to multimedia contents are collected and organized to produce a data content channel and associated channel information. The data content channel is divided into data blocks depending on the associated channel information. Indexes are respectively associated to these data blocks. Then, a file is produced comprising the indexes, the data blocks and first and second information describing respectively the file and these data blocks. If communication equipments request a multimedia content, first information describing at least one file associated to a multimedia content are retrieved. Indexes of each file described by the retrieved first information are, then, downloaded. Accordingly, at least one data block associated to a downloaded index can be downloaded on demand. The downloaded indexes and channel information associated to the file are analyzed on demand of the communication equipments, to determine each data block to be downloaded at a chosen time. Finally, each downloaded data block is provided, on demand and at chosen time, to the communication equipments so that data contents that it comprises could be analyzed and displayed.

As another example, a method for merging the multimedia content **100a** and the social interactions **100b** may be performed, by associating microposts messages to a live multimedia event (for instance filtering Twitter® messages based on the hash tags).

The multimedia content **100a** is provided to a Multimedia Segmentation module **200.** This module uses the multimedia content **100a** and provides as output a sequence S of n multimedia segments **200c** temporally ordered: S= S1,S2,..,S3,..,Sn. The segmentation step may be performed manually or with using current methods of the background art, for instance by exploiting characteristics of the multimedia content such as speaker detection, speaker change detection, shot detection or camera motion detection.

The social interactions **100b** are used as input of a Topic Generator module **300.** This module is in charge to extract from a stream of social interactions, used as a "knowledge source", a set of topics/perspective that will be used to form a multidimensional semantic referential. Each dimension/axis of the semantic referential constitutes a user perspective or a salient knowledge topic extracted from the social interactions. Hence each topic/user perspective refers to a "knowledge plan" extracted from the users social interactions.

The Topic Generator module **300** comprises a Social Topics Extractor **300a** component. This component aims to extract the expressed knowledge collected in the users social interactions **100b,** and to organize it through a number m of distinct topics. These topics constitute a multidimensional space referential with m dimensions. The component **300a** performs a keywords extraction from the social interactions **100b,** filters nouns, computes their importance/relevance and classifies them in the appropriate topics.

To do so a topic model algorithm is performed. In one embodiment, this algorithm may be a LDA (Latent Dirichlet Allocation) based approach.

Moreover, each topic may be described by a set of weighted keywords, defining a particular semantic field, or user point of view. The weighting of the keywords may be, for instance, computed during a semantic analysis based on relevance criterions such as number/frequency of occurrence of a word/group of words within the social interactions content.

In one embodiment, the Topic Generator module **300** may further comprises an Opinions & Sentiments Extractor **300b** component. This component is in charge to build a k-space with opinions and sentiments extracted from the users social interactions **100b.** More particularly, it permits to complete a semantic analysis, by extracting subjectivity provided by the user in social interactions **100b** (for instance if some comments/opinions are positive, negative or neutral with respect to the multimedia content **100a).**

Accordingly, a number of secondary perspectives/topics are generated according to the sentiments and/or opinions expressed by users in the social interactions **100b.**

These secondary perspectives/topics may be then, for example, either combined with the generated/extracted topics (i.e. perspectives) of the semantic referential computed by the module **300a,** or used as a secondary "subjective" referential after a first search using the semantic referential.

The Topic Generator module **300** provides as output, the set of topics **300c** based on the results of the component **300a** (extracted topics/perspectives), and optionally based on the results (secondary perspectives/topics) of the component **300b.**

The multimedia segments **200c,** and the generated/extracted topics **300c,** forming a multidimensional semantic referential, are used as inputs of a Multimedia Segments Classifier module **400.** The module **400** processes the inputs data to classify all multimedia segments in the semantic referential with regards to topics/perspectives. Each multimedia segment is weighted, according to its relevance, along each perspective/topic dimension. Accordingly, each perspective/topic is associated to an ordered list (i.e. a sequence) of weighted multimedia segments **400a.**

The sequence of classified/weighted multimedia segments **400a** is then provided to a Multi-Layer Summarizer module **500.** Based on information such as weighting, the module **500** concatenates the most relevant multimedia segments **400a** for each perspective/topic dimension. Hence, the most relevant segments **400a,** that could be initially found anywhere in the multimedia content **100a,** are chosen and concatenated into a single summary segment according to each user perspective/topic.

In one embodiment, the concatenation step can be performed according to predefined constraints such as length or size of the resulting video segments.

The Multi-Layer Summarizer **500** module provides as output a sequence of summary segments with related extracted perspectives or topics.

Each generated summary segment and its related extracted perspective/topic is then provided to the Multi-layered summaries database **600.**

In one embodiment, the database **600** can be used as a data source for a visualization system. For instance, a visualization system may be a system comprising an interface provided to users, to facilitate the browsing of multimedia contents.

In one embodiment, a Summary Visualization System **700** exploits the data stored in the Multi-layered summaries database **600.**

For instance, a user **800** performs a request **900a** for a multimedia content, through a Summarization interface **700a** comprising a search engine. Each request **900a** is translated into a weight vector in the perspective spaces of the semantic referential.

Based on the user request **900a** and on related perspective indicators **700c** provided by the database **600,** a Perspective Selector module **700b** requests at least one weighted perspective **700d** to the Multi-layered summaries database **600.** The database provides as output to the Summarization interface **700a,** at least one multimedia summary segment **600a** linked to a user perspective. As a result, the Summary Visualization system **700** proposes to the user **800** a display **900b** of the selected multimedia summary segment **600a.**

In another embodiment, following an ongoing display **900b** of a selected multimedia summary segment, the user **800** may update or refine his initial request **900a** through the Summarization interface **700a.** As a consequence, the Summary Visualization system **700** may compute again possible alternatives, based on the refined request and suggest other possible ends of the ongoing initial multimedia segment **600a.**

Accordingly, one advantage of such an embodiment is that it provides adaptability and flexibility to summarization methods.

In one embodiment, a new semantic Next/Previous (Fast Forward/Backward) segment can be implemented, to browse and display multimedia summary segments, according to a generated point of view/perspective, in the order defined by the relevance (i.e. the weightings of the segments) in the semantic space.

In one embodiment, the present solution may be performed either with a live, or with a register multimedia content.

In another embodiment, this solution may be integrated into a MVP (*Multi Screen Video Platform*) Alcatel Lucent® product which creates, manages and monetizes advanced video and payTV services and delivers them to more subscribers, devices and locations.

In one embodiment, the present solution may be used with any application supporting communication or social interactions, in the context of social TV or video service platforms.

Advantageously, the above-described system and method leverage social collective intelligence brought by users communities through their social interactions around a multimedia content.

Social interactions are used as a data source to derive several user perspectives concerning a same multimedia content. The said multimedia content is associated to new knowledge dimensions and users perspectives not directly detectable inside a multimedia content.

More specifically, in the background art, the vocabulary captured from textual data stream embedded in a multimedia content is representative of the content itself and does not comprise any kind of abstraction or interpretation. At the opposite, in the described embodiments, the vocabulary captured from social interactions stream is relative to the users themselves, with a diversity of terms and with different angles, hence more representative and accurate of users point of views.

Advantageously, a set of relevant video segments according to each user perspective is provided to users, solving the problem of the summarization of a whole multimedia content.

Another advantage is that it offers the users the possibility to request a specific multimedia segment matching accurately his textual request. Indeed, sentiment/opinion topics bring subjective dimension and combined with extracted topics, provide more accurate results compared to other existing methods.

Advantageously, the fact to introduce user subjectivity, allows to perform a further more accurate selection of a multimedia segment, following a user request. For instance, a user may request relevant media content, where its related subject is linked to a chosen positive or negative point of view. Advantageously, the above-described embodiments permit to save time and decrease difficulty when searching a relevant multimedia content, fitting specific user requests.

## Claims

1. A method for summarizing a multimedia content, the method comprising the following steps:
- segmenting a multimedia content **(100a)** into temporally ordered multimedia segments;
- extracting topics from social interactions **(100b)** relating to the said multimedia content **(100a);**
- associating each extracted topic to a sequence of multimedia segments.

2. The method of claim 1, wherein each topic comprises a sequence of weighted keywords and forms a dimension of a multidimensional semantic referential.

3. The method of claim 2, wherein during the association step, each multimedia segment is classified by relevance according to the weightings of each topic dimension in the multidimensional semantic referential.

4. The method of claim 3, further comprising a concatenation step of relevant multimedia segments into multimedia summary segments.

5. The method of any claims 1 to 4, wherein the extraction step further comprises an extraction of users opinions and sentiments from social interactions **(100b).**

6. The method of claim 5, wherein opinions and sentiments are used as secondary topics to form a multidimensional subjective referential.

7. The method of claim 6, wherein each multimedia segment is further classified regarding to the multidimensional subjective referential.

8. The method of any claims 4 to 7, wherein it further comprises a selecting and displaying steps of the multimedia summary segments following a user request **(900a).**

9. The method of any claims 4 to 8, wherein it further comprises a browsing step of the multimedia summary segments, according to the classification of each multimedia segment in the multidimensional semantic referential.

10. The method of any claims 1-9, wherein the topics are extracted with a Latent Dirichlet based algorithm

11. A system for summarizing a multimedia content, the system comprising the following modules:
- a Multimedia Segmentation module **(200)** configured to segment a multimedia content **(100a)** into temporally ordered multimedia segments;
- a Topic Generator module **(300)** comprising a Social Topics Extractor module **(300a),** configured to extract topics from social interactions **(100b)** relating to the said multimedia content **(100a);**
- a Multimedia Segments Classifier module **(400)** configured to associate each extracted topic to a sequence of multimedia segments.

12. The system of claim 11, wherein the Topic Generator module **(300)** further comprises an "Opinions and Sentiments Extractor" module **(300b),** configured to extract users opinions and sentiments from the social interactions **(100b).**

13. The system of claim 11 or 12, further comprising a Multi-Layer Summarizer module **(500),** configured to concatenate the multimedia segments into multimedia summary segments.

14. The system of any claims 11 to 13, further comprising a Summary Visualization System **(700)** configured to select multimedia summary segments stored in a Multi-layered summaries database **(600)** and display them, following a user request **(900a).**

15. A computer program implemented on a processing unit of a computer, the program including code sections for performing instructions corresponding to the steps of a method according to any of claims 1-10.

## Amended claims

### Amended claims in accordance with Rule 137(2) EPC.

**1.** A method for summarizing a multimedia content, the method comprising the following steps:
- segmenting a multimedia content (**100a**) into temporally ordered multimedia segments;
- extracting topics from social interactions (**100b**) relating to the said multimedia content (**100a**), each topic comprising a sequence of weighted keywords and forming a dimension of a multidimensional semantic referential;
- classifying all multimedia segments in the semantic referential with regards to each extracted topic, each multimedia segment being classified according to a relevance weight factor;
- concatenating most relevant multimedia segments into multimedia summary segments according to each extracted topic.

**2.** The method of claim 1, wherein the extraction step further comprises an extraction of users opinions and sentiments from social interactions (**100b**).

**3.** The method of claim 2, wherein opinions and sentiments are used as secondary topics to form a multidimensional subjective referential.

**4.** The method of claim 3, wherein each multimedia segment is further classified regarding to the multidimensional subjective referential.

**5.** The method of any claims 1 to 4, wherein it further comprises a selecting and displaying steps of the multimedia summary segments following a user request (**900a**).

**6.** The method of any claims 1 to 5, wherein it further comprises a browsing step of the multimedia summary segments, according to the classification of each multimedia segment in the multidimensional semantic referential.

**7.** The method of any claims 1 to 6, wherein the topics are extracted with a Latent Dirichlet based algorithm.

**8.** A system for summarizing a multimedia content, the system comprising the following modules:
- a Multimedia Segmentation module (2**0**0) configured to segment a multimedia content (**100a**) into temporally ordered multimedia segments;
- a Topic Generator module (**300**) comprising a Social Topics Extractor module (**300a**), configured to extract topics from social interactions (**100b**) relating to the said multimedia content (**100a**), each topic comprising a sequence of weighted keywords and forming a dimension of a multidimensional semantic referential;
- a Multimedia Segments Classifier module (**400**) configured to classify all multimedia segments in the semantic referential with regards to each extracted topic, each multimedia segment being classified according to a relevance weight factor;
- a Multi-Layer Summarizer module (**500**), configured to concatenate most relevant multimedia segments into multimedia summary segments according to each extracted topic.

**9.** The system of claim 8, wherein the Topic Generator module (**300**) further comprises an "Opinions and Sentiments Extractor" module (**300b**), configured to extract users opinions and sentiments from the social interactions (**100b**).

**10.** The system of claim 8 or 9, further comprising a Summary Visualization System (**700**) configured to select multimedia summary segments stored in a Multi-layered summaries database (**600**) and display them, following a user request (**900a**).

**11.** A computer program implemented on a processing unit of a computer, the program including code sections for performing instructions corresponding to the steps of a method according to any of claims 1 to 7.
